# EUROPÄISCHE PATENTSCHRIFT

(11) **EP 2 083 203 B1**
(45) Veröffentlichungstag und Bekanntmachung des Hinweises auf die Patenterteilung: **12.09.2012**
(21) Anmeldenummer: 08100722.1
(22) Anmeldetag: 22.01.2008
(51) Int. Cl.: F16L 25/00

(54) **Rohrverschraubung für Metallwellrohre**
Screwed fitting for metal corrugated pipes
Filet de tube pour tubes métalliques ondulés

(43) Veröffentlichungstag der Anmeldung: 29.07.2009
(73) Patentinhaber: SERTO Holding AG, 8355 Aadorf (CH)
(72) Erfinder: Bachmann, Christoph, 9532, Rickenbach (CH); Westermann, Pirmin, 8303, Bassersdorf (CH)
(74) Vertreter: De Colle, Piergiacomo

(56) Entgegenhaltungen:
- WO-A-97/42442
- US-A- 4 630 850
- US-A- 5 441 312
- US-A1- 2005 285 401

## Beschreibung

Die Erfindung bezieht sich auf eine Rohrverschraubung für Metallwellrohre umfassend einen Einschraubnippel zur Verbindung der Rohrverschraubung mit weiteren Rohrleitungselementen, einen Klemmring zum Einklemmen des Metallwellrohres und eine Überwurfmutter, wobei der Einschraubnippel und die Überwurfmutter zu einander passende Gewindebereiche aufweisen, wobei der Klemmring als ein vom Einschraubnippel verformbarer Ring ausgebildet ist, der eine druckdichte Verbindung bewirkt.

Im Rohrleitungsbau, insbesondere im Bereich Solaranlagenbau, werden Wellrohre aus Metall als Übertragungsleitungen für das Wärmeträgermedium eingesetzt. Die gewellten Rohre sind sehr gut geeignet, Änderungen im Leitungsverlauf, die durch Temperaturschwankungen entstehen, zu kompensieren. Weiterhin werden metallische Wellrohre auch bei elektrischen Leitungen als Abschirmung gegen elektromagnetische Störungen verwendet. Die Metallwellrohre können schraubenlinien- d.h. spiralförmig oder parallel ringförmig gewellt sein. Wellrohre aus Kunststoff werden vor allem als Kanal zur Verlegung von elektrischen Leitern, z.B. im Fahrzeugbau verwendet.

Aus der DE 10 2005 060 576 A1 ist eine Rohrverschraubung für zylindrisch parallel gewellte Rohre bekannt. Die Verschraubung besteht ausser aus dem Wellrohr aus vier Teilen: Ein rohrförmiges Anschlussteil mit einer Auflage für einen Dichtring mit einem konisch abgeschrägten Profil auf der nach innen gerichteten Seite des Dichtringes, einen zweiten Ring, der in dem Tal hinter der ersten Welle des Wellrohres eingelegt werden muss, und eine Überwurfmutter zum Verschrauben mit dem rohrförmigen Anschlussteil. Der zweite Ring und das rohrförmige Anschlussteil sind so dimensioniert, dass der Ring beim Verschrauben auf die Stirnseite des Anschlussteiles aufliegt, und dass die erste Welle des Wellrohres in der Verschraubung festgehalten wird. Damit der Ring in dem ersten Wellental eingelegt werden kann, ist dieser zweiteilig oder aus zwei nahezu halben Ringteilen, die über einen schmalen Steg miteinander verbunden sind, ausgebildet. Weil das Wellrohr bei der Verschraubung nicht oder nur unwesentlich gestaucht wird, muss das Rohrende möglichst genau in einem Wellental liegen.

Aus der US 4630850 ist weiterhin eine Rohrleitungsverbindung mit einem geschlitzten oder geteilten kreisförmigen Klemmring bekannt, der auf der Innenseite eine schraublinien- oder wellenförmige Oberfläche aufweist. Der Klemmring weist in axialer Richtung einen Schlitz auf und auf der dem Schlitz gegenüberliegende Seite eine durch eine axiale Nut gebildeten schmalen Steg. In der Vormontage muss der Klemmring auf der Aussenseite des Wellrohres aufgebracht werden und zu dem Wellenprofil des Wellrohres ausgerichtet werden. Der Klemmring wird beim Zusammenschrauben von einer leicht konischen Innenseite der Bohrung des Verbindungskörpers ausgerichtet bzw. zentriert. Eine Stauchung und eine Verformung des Klemmringes finden nicht statt. Zur Abdichtung wird eine Dichtung benötigt.

Ausgehend von diesem Stand der Technik ist es Aufgabe der Erfindung, eine Rohrverschraubung für Metallwellrohre anzugeben, die aus möglichst wenigen und möglichst einfach herzustellenden Einzelteilen aufgebaut ist, die eine gute Dichtwirkung aufweist und die wieder verwendbar aufgebaut ist.

Diese Aufgabe wird gelöst durch eine Rohrverschraubung für Metallwellrohre umfassend einen Einschraubnippel zur Verbindung der Rohrverschraubung mit weiteren Rohrleitungselementen, einen Klemmring zum Einklemmen des Metallwellrohres und eine Überwurfmutter, wobei der Elnschraubnippel und die Überwurfmutter zu einander passende Gewindebereiche aufweisen, und wobei der Klemmring als ein vom Einschraubnippel verformbarer Ring ausgebildet ist, der eine druckdichte Verbindung bewirkt, wobei der **Klemmring ein zylindrischer Ring** mit einer konstanten Wandstärke ist.

Bevorzugte Weiterbildungen der Erfindung ergeben sich aus den abhängigen Ansprüchen.

Es ist von Vorteil, dass die gleiche Rohrverschraubung mehrmals geöffnet und wieder geschlossen werden kann. Dies wird dadurch erreicht, dass beim Verschrauben lediglich der Klemmring verformt wird und sich an die Form des Wellrohres und des Einschraubnippels anpasst. Wenn die einmal geöffnete Rohrverschraubung an einem neuen Ort mit einem neuen Wellrohr verbunden werden muss, wird als Ersatzteil lediglich ein neuer Klemmring benötigt.

Es ist auch von Vorteil, dass das Metallrohr beim Zusammenbau mit der Rohrverschraubung nicht übermässig verquetscht wird und bei der Endmontage nicht überzogen werden kann. Dies wird dadurch erreicht, dass die Überwurfmutter eine zweite Schulter als Anschlag für das erste Ende des Einschraubnippels aufweist. Der Montageprozess wird hierdurch sicherer und es entstehen keine Undichtheiten durch Fehlmontage.

Es ist weiter auch von Vorteil, dass bei der Montage des Metallwellrohres die Verletzungsgefahr deutlich reduziert wird. Dies wird dadurch erreicht, dass der Einschraubnippel eine ringförmige Wanne als Anschlag für das zweite Ende des Klemmringes und für das Metallwellrohr aufweist. Dies wird auch dadurch erreicht, dass die ringförmige Wanne einen halbkreisförmigen Bodenbereich aufweist. Abgeschnittene Metallwellrohre, insbesondere solche aus Edelstahl, weisen nach dem Abschneiden immer scharfkantige Enden auf. Durch die ringförmige Wanne mit dem halbkreisförmigen Boden wird das Wellrohr derart verformt, dass ein Wellrohr mit einem abgerundeten Ende ohne scharfe Kanten entsteht.

Ausführungsbeispiele der Erfindung werden anhand der Figuren beschrieben. Es zeigen:
Figur 1 einen Schnitt durch eine erfindungsgemässe Rohrverschraubung,
Figur 2 einen Schnitt durch die einzelnen Teile der Rohrverschraubung von Figur 1,

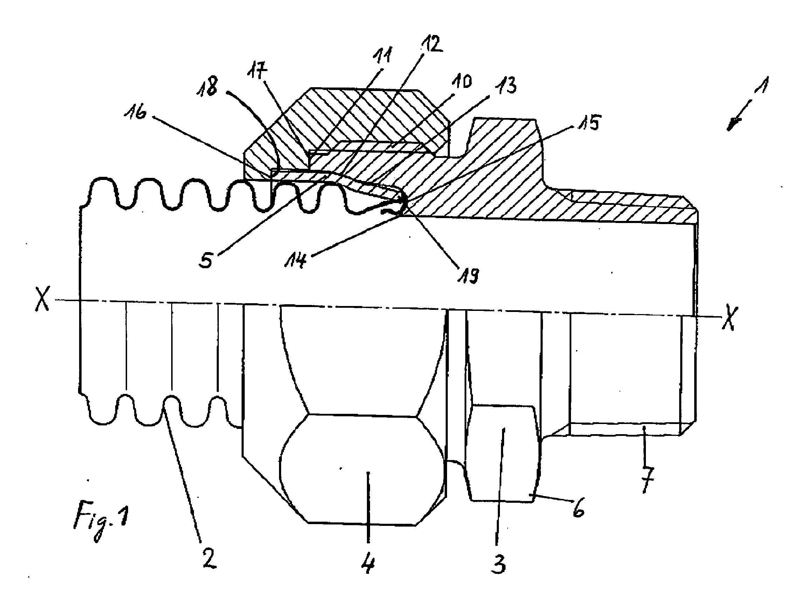

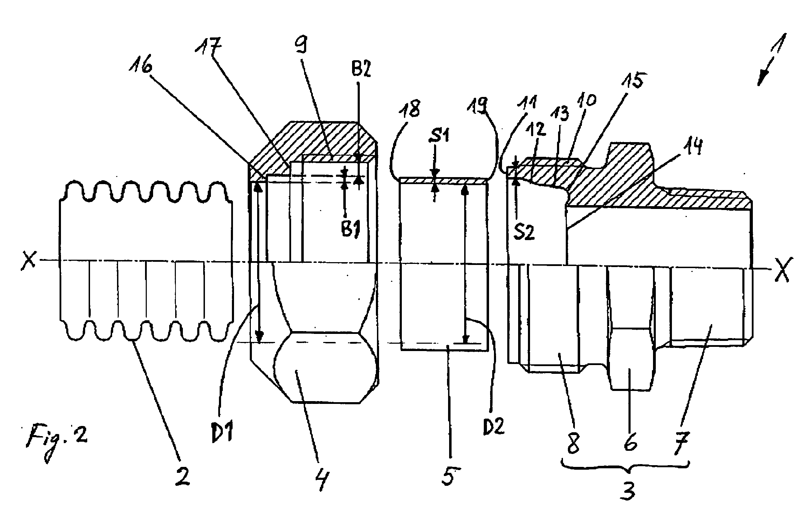

In Figur 1 ist eine Rohrverschraubung 1 für Metallwellrohre 2 im zusammen geschraubten Zustand geschnitten dargestellt. In Figur 2 sind die einzelnen Teile der Rohrverschraubung 1 vor dem Zusammenschrauben dargestellt. Das Metallwellrohr 2 ist hier als ein parallel ringförmig gewelltes Metallrohr 2 dargestellt, kann aber auch schraubenlinienförmig oder spiralförmig gewellt ausgebildet sein. Die Rohrverschraubung 1 besteht aus einem Einschraubnippel 3, einer Überwurfmutter 4 und einem Klemmring 5. Der Klemmring 5 ist im Ausführungsbeispiel von Figuren 1 und 2 ein einfacher ringförmiger Metallkörper mit einer Wandstärke S1, einem flachen ersten Ende 18 und einem ebenso flachen zweitem Ende 19, wobei die Kanten zwischen den Wänden und den Enden 18,19 leicht abgerundet ausgebildet sind.

Der Einschraubnippel 3 ist ein rohrförmiger Metallkörper mit einem Sechskant 6 zum Einschrauben des Einschraubnippels 3 und mit einem ersten Aussengewindebereich 7 zur Verbindung der Rohrverschraubung 1 mit weiteren Rohrleitungselementen oder Bauteilen, die hier nicht abgebildet sind. Der zweite Aussengewindebereich 8 auf der gegenüber liegenden Seite des Sechskantes 6 weist ein zu einem Innengewinde 9 der Überwurfmutter 4 passendes Aussengewinde 10 auf. An dem zweiten Aussengewindebereich 8 schliesst ein erstes Ende 11 des Einschraubnippels 3 ohne Aussengewinde an. Im Bereich des zweiten Aussengewindes 8 sind, gesehen vom ersten Ende 11, an einander anschliessend auf der Innenseite des Einschraubnippels 3 zwei konische Bereiche 12, 13 und einen Anschlag 14 ausgebildet. Der Winkel, unter dem der erste konische Bereich 12 zur Rohrleitungsachse X verläuft, ist grösser als der Winkel des zweiten konischen Bereichs 13. Der Anschlag 14 ist als eine ringförmige Wanne 14 mit einem halbkreisförmigen Bodenbereich 15 ausgebildet.

Die Überwurfmutter 4 weist an der engsten Stelle einen Innendurchmesser D1 auf, der geringfügig grösser ist als der Aussendurchmesser des Metallwellrohres 2. Das Metallwellrohr 2 erfordert keine besondere Vorbereitung und muss insbesondere nicht gestreckt, gebördelt oder aufgeweitet werden, wie das bei anderen Rohr- oder Wellrohrverschraubungen der Fall ist. Die Überwurfmutter 4 weist auf der Innenseite eine erste Schulter 16 und eine zweite Schulter 17 auf. Die erste Schulter 16 weist eine Breite B1 auf, die im Wesentlichen der Wandstärke S1 des Klemmringes 5 entspricht. Der Innendurchmesser D1 der Überwurfmutter 4 ist identisch mit dem Innendurchmesser D2 des Klemmringes 5, derart, dass das Metallwellrohr 2 ungehindert durch die Überwurfmutter 4 und durch den Klemmring 5 hindurch geschoben werden kann.

Anschliessend an der ersten Schulter 16 ist die zweite Schulter 17 mit einem etwas grösseren Innendurchmesser als der Innendurchmesser an der ersten Schulter 16 ausgebildet. Die zweite Schulter 17 weist eine Breite B2 auf, die im Wesentlichen der Wandstärke S2 des ersten Endes 11 des Einschraubnippels 3 entspricht. Die zweite Schulter 17 dient beim Zusammenschrauben als Anschlag für das erste Ende 11 des Einschraubnippels 3. Die zweite Schulter 17 verhindert, dass die Rohrverschraubung 1 zu tief zusammen geschraubt werden kann. Durch den Anschlag wird ein übermässiges Verquetschen des Metallwellrohres 2 und des Klemmringes 5 verhindert. Der Montageprozess wird sicherer und es entstehen keine Undichtheiten durch Fehlmontage.

Der Klemmring 5 ist aus einem Werkstoff hergestellt, der beim Zusammenschrauben der Rohrverschraubung 1 von dem Elnschraubnippel 3 verformt werden kann. Die Länge des Klemmringes 5 ist deutlich kleiner als die Tiefe der Überwurfmutter 4 zwischen der ersten Schulter 16 und dem Ende der Überwurfmutter 4. Der Klemmring 5 kann aus einer Eisen-, Kupfer- oder Leichtmetalllegierung ausgebildet sein. Der Klemmring 5 kann einer Wärmebehandlung unterworfen werden, damit die Verformbarkeit gewährleistet ist. Der Klemmring 5 kann auch einem harten, jedoch verformbaren Kunststoff hergestellt werden. Der Zusammenbau der Rohrverschraubung 1 verläuft wie folgt:

Der Klemmring 5, die Überwurfmutter 4 und der Einschraubnippel 3 werden zusammen gesteckt und anschliessend wenige Umdrehungen zusammengeschraubt derart, dass der Klemmring 5 mit den beiden Enden 18,19 anfänglich noch ohne Verformung zwischen der ersten Schulter 16 des Einschraubnippels 3 und dem ersten konischen Bereich 12 der Überwurfmutter 4 gehalten wird. Die Rohrverschraubung 1 kann in diesem vormontierten Zustand auf der Baustelle angeliefert werden. In diesem Zustand wird das Ende des Metallwellrohres 2, das, dank der identischen Innendurchmessern D1 der Überwurfmutter 4 und D2 des Klemmringes 5 ohne Widerstand und ohne die Gefahr des Verhakens oder Verkantens geführt werden kann, eingeschoben. Das Metallwellrohr 2 kann im vormontierten Zustand, d.h. in der noch unverpressten Rohrverschraubung 1, nur bis zum zweiten konischen Bereich 13 eingeschoben werden.

In diesem Zustand werden anschliessend die Überwurfmutter 4 und der Einschraubnippel 3 weiter zusammen geschraubt, so weit, bis das erste Ende 11 des Einschraubnippels 3 auf der zweiten Schulter 17 der Überwurfmutter 4 aufliegt. Beim Zusammenschrauben wird der Klemmring 5 von den konischen Bereichen 12,13 stufenweise, d.h. zuerst stärker und später weniger stark, verformt. Der sich verformende Klemmring 5 presst auch das Ende des Metallwellrohres 2 in die ringförmige Wanne 14. Das Ende des Metallwellrohres 2 wird in dem halbkreisförmigen Bodenbereich 15 der ringförmigen Wanne 14 so verformt, dass ein abgerundetes Ende ganz ohne scharfe Kanten entsteht. Die Dimensionierung und die Verformbarkeit des Klemmringes 5 bewirken, dass eine druckdichte Verbindung hergestellt wird. Die Rohrverschraubung 1 ist gas- und flüssigkeitsdicht und kann in Rohrleitungssysteme eingesetzt werden, in die Wärmeträgermedien mit Temperaturen von etwa 200 °C transportiert werden.

## Patentansprüche

1. Rohrverschraubung (1) für Metallwellrohre (2) umfassend einen Einschraubnippel (3) zur Verbindung der Rohrverschraubung (1) mit weiteren Rohrleitungselementen, einen Klemmring (5) zum Einklemmen des Metallwellrohres (2) und eine Überwurfmutter (4), wobei der Einschraubnippel (3) und die Überwurfmutter (4,) zu einander passende Gewindebereiche aufweisen, wobei der Klemmring (5) als ein vom Einschraubnippel (3) verformbarer Ring (5) ausgebildet ist, der eine druckdichte Verbindung bewirkt **dadurch gekennzeichnet, dass der Klemmring (5) ein zylindrischer Ring (5) mit einer konstanten Wandstärke (S1) ist.**

2. Rohrverschraubung (1) für Metallwellrohre (2) nach dem Anspruch 1, **dadurch gekennzeichnet, dass** der Klemmring (5) als ein vom Einschraubnippel (3) verformbarer zylindrischer Ring (5) mit einem Innendurchmesser (D2), der identisch ist mit dem kleinsten Innendurchmesser (D1) der Überwurfmutter (4) ausgebildet ist.

3. Rohrverschraubung (1) für Metallwellrohre (2) nach mindestens einem der Ansprüche 1 oder 2, **dadurch gekennzeichnet, dass** die Überwurfmutter (4) eine erste Schulter (16) als Anschlag für ein erstes Ende (18) des Klemmringes (5) aufweist, wobei die Breite (B1) der Schulter (16) im wesentlichen der Wandstärke (S1) des Klemmringes (5) entspricht.

4. Rohrverschraubung (1) für Metallwellrohre (2) nach mindestens einem der Ansprüche 1 bis 3, **dadurch gekennzeichnet, dass** die Überwurfmutter (4) eine zweite Schulter (17) mit einer Breite (B2) als Anschlag für das erste Ende (11) des Einschraubnippels (3) aufweist.

5. Rohrverschraubung (1) für Metallwellrohre (2) nach mindestens einem der Ansprüche 1 bis 4**, dadurch gekennzeichnet, dass** der Einschraubnippel (3) eine ringförmige Wanne (14) als Anschlag für das zweite Ende (19) des Klemmringes (5) und für das Metallwellrohr (2) aufweist.

6. Rohrverschraubung (1) für Metallwellrohre (2) nach mindestens einem der Ansprüche 1 bis 5, **dadurch gekennzeichnet, dass** die ringförmige Wanne (14) einen halbkreisförmigen Bodenbereich (15) aufweist.

7. Rohrverschraubung (1) für Metallwellrohre (2) nach mindestens einem der Ansprüche 1 bis 6, **dadurch gekennzeichnet, dass** der Einschraubnippel (3) zwischen der ringförmigen Wanne (14) und dem ersten Ende (11) mindestens zwei konische Bereiche (12,13) zur stufenweise Verformung des Klemmringes (5) aufweist.

8. Rohrverschraubung (1) für Metallwellrohre (2) nach mindestens einem der Ansprüche 1 bis 7, **dadurch gekennzeichnet, dass** der Klemmring (5) aus einem von dem Einschraubnippel (3) verformbaren Werkstoff, beispielsweise einer wärmebehandelten Metalllegierung, ausgebildet ist.

## Claims

1. Screwed pipe connection (1) for corrugated metal pipes (2), comprising a screw-in nipple (3) for connecting the screwed pipe connection (1) to further pipeline elements, a clamping ring (5) for clamping the corrugated metal pipe (2) and a union nut (4), wherein the screw-in nipple (3) and the union nut (4) have mating threaded regions, wherein the clamping ring (5) is in the form of a ring (5) that is deformable by the screw-in nipple (3) and brings about a pressure-tight connection, **characterized in that** the clamping ring (5) is a cylindrical ring (5) having a constant wall thickness (S1).

2. Screwed pipe connection (1) for corrugated metal pipes (2) according to Claim 1, **characterized in that** the clamping ring (5) is in the form of a cylindrical ring (5) which is deformable by the screw-in nipple (3) and has an inside diameter (D2) which is identical to the smallest inside diameter (D1) of the union nut (4).

3. Screwed pipe connection (1) for corrugated metal pipes (2) according to at least one of Claims 1 and 2, **characterized in that** the union nut (4) has a first shoulder (16) as an abutment for a first end (18) of the clamping ring (5), wherein the width (B1) of the shoulder (16) corresponds substantially to the wall thickness (S1) of the clamping ring (5).

4. Screwed pipe connection (1) for corrugated metal pipes (2) according to at least one of Claims 1 to 3, **characterized in that** the union nut (4) has a second shoulder (17) having a width (B2) as an abutment for the first end (11) of the screw-in nipple (3).

5. Screwed pipe connection (1) for corrugated metal pipes (2) according to at least one of Claims 1 to 4, **characterized in that** the screw-in nipple (3) has an annular well (14) as an abutment for the second end (19) of the clamping ring (5) and for the corrugated metal pipe (2).

6. Screwed pipe connection (1) for corrugated metal pipes (2) according to at least one of Claims 1 to 5, **characterized in that** the annular well (14) has a semicircular bottom region (15).

7. Screwed pipe connection (1) for corrugated metal pipes (2) according to at least one of Claims 1 to 6, **characterized in that**, between the annular well (14) and the first end (11), the screw-in nipple (3) has at least two conical regions (12, 13) for stepped deformation of the clamping ring (5).

8. Screwed pipe connection (1) for corrugated metal pipes (2) according to at least one of Claims 1 to 7, **characterized in that** the clamping ring (5) is formed from a material that is deformable by the screw-in nipple (3), for example a heat-treated metal alloy.

## Revendications

1. Filetage de tube (1) pour tubes métalliques ondulés (2), comprenant un raccord vissable (3) pour la liaison du filetage de tube (1) à d'autres éléments de conduite tubulaire, une bague de serrage (5) pour serrer le tube métallique ondulé (2) et un écrou d'accouplement (4), le raccord vissable (3) et l'écrou d'accouplement (4) présentant des régions filetées adaptées l'une à l'autre, la bague de serrage (5) étant réalisée sous forme de bague (5) pouvant être déformée par le raccord vissable (3), qui réalise une liaison étanche à la pression, **caractérisé en ce que** la bague de serrage (5) est une bague cylindrique (5) ayant une épaisseur de paroi (S1) constante.

2. Filetage de tube (1) pour tubes métalliques ondulés (2) selon la revendication 1, **caractérisé en ce que** la bague de serrage (5) est réalisée sous la forme d'une bague cylindrique (5) déformable par le raccord vissable (3), ayant un diamètre intérieur (D2) qui est identique au plus petit diamètre intérieur (D1) de l'écrou d'accouplement (4).

3. Filetage de tube (1) pour tubes métalliques ondulés (2) selon au moins l'une quelconque des revendications 1 ou 2, **caractérisé en ce que** l'écrou d'accouplement (4) présente un premier épaulement (16) servant de butée pour une première extrémité (18) de la bague de serrage (5), la largeur (B1) de l'épaulement (16) correspondant essentiellement à l'épaisseur de paroi (S1) de la bague de serrage (5).

4. Filetage de tube (1) pour tubes métalliques ondulés (2) selon au moins l'une quelconque des revendications 1 à 3, **caractérisé en ce que** l'écrou d'accouplement (4) présente un deuxième épaulement (17) ayant une largeur (B2) servant de butée pour la première extrémité (11) du raccord vissable (3).

5. Filetage de tube (1) pour tubes métalliques ondulés (2) selon au moins l'une quelconque des revendications 1 à 4, **caractérisé en ce que** le raccord vissable (3) présente une cuvette de forme annulaire (14) servant de butée pour la deuxième extrémité (19) de la bague de serrage (5) et pour le tube métallique ondulé (2).

6. Filetage de tube (1) pour tubes métalliques ondulés (2) selon au moins l'une quelconque des revendications 1 à 5, **caractérisé en ce que** la cuvette de forme annulaire (14) présente une région de fond (15) de forme semi-circulaire.

7. Filetage de tube (1) pour tubes métalliques ondulés (2) selon au moins l'une quelconque des revendications 1 à 6, **caractérisé en ce que** le raccord vissable (3) présente entre la cuvette de forme annulaire (14) et la première extrémité (11) au moins deux régions coniques (12, 13) pour la déformation étagée de la bague de serrage (5).

8. Filetage de tube (1) pour tubes métalliques ondulés (2) selon au moins l'une quelconque des revendications 1 à 7, **caractérisé en ce que** la bague de serrage (5) est réalisée à partir d'un matériau déformable par le raccord vissable (3), par exemple un alliage métallique traité thermiquement.
